# EUROPÄISCHE PATENTSCHRIFT

(11) **EP 3 835 910 B1**
(45) Veröffentlichungstag und Bekanntmachung des Hinweises auf die Patenterteilung: **24.08.2022**
(21) Anmeldenummer: 21155693.1
(22) Anmeldetag: 04.06.2019
(51) Int. Cl.: G05D 1/02

(54) **VERFAHREN ZUM ÜBERFÜHREN EINES KRAFTFAHRZEUGS VON EINER AKTUELLEN POSITION ZU EINER ZIELPOSITION IN EINEM VOM ALLGEMEINEN STRASSENVERKEHR ABGETRENNTEN BEREICH**
METHOD FOR TRANSFERRING A MOTOR VEHICLE FROM A CURRENT POSITION TO A TARGET POSITION IN AN AREA SEPARATED FROM THE GENERAL TRAFFIC
PROCÉDÉ DE DÉPLACEMENT D'UN VÉHICULE AUTOMOBILE D'UNE POSITION ACTUELLE VERS UNE POSITION CIBLE DANS UNE ZONE DÉLIMITÉE DU TRANSPORT ROUTIER PUBLIQUE

(30) Priorität: 15.06.2018 DE 102018114419
(43) Veröffentlichungstag der Anmeldung: 16.06.2021
(62) Teilanmeldung aus: 19178006.3
(73) Patentinhaber: MAN Truck & Bus SE, 80995 München (DE)
(72) Erfinder: Hildebrandt, Arne-Christoph, 80995 München (DE); Kraus, Sven, 80995 München (DE); Röllnreiter, Simon, 80995 München (DE); Bänziger, Timo, 80995 München (DE)
(74) Vertreter: v. Bezold & Partner Patentanwälte - PartG mbB

(56) Entgegenhaltungen:
- EP-A2- 1 480 097
- WO-A1-2011/138035
- DE-A1-102014 211 557
- DE-A1-102015 202 786
- GB-A- 2 552 020

## Beschreibung

Die Erfindung betrifft ein Verfahren zum Überführen, vorzugsweise zum automatisierten Überführen, eines Kraftfahrzeugs von einer aktuellen Position zu einer Zielposition in einem vom allgemeinen Straßenverkehr abgetrennten Bereich.

Im Stand der Technik sind grundsätzlich diverse Verfahren bekannt, um ein Kraftfahrzeug autonom oder teil-autonom von einem Startpunkt zu einem vorgegebenen Zielort zu bewegen. In der Praxis sind die meisten dieser Verfahren jedoch mit den heute auf dem Markt erhältlichen Kraftfahrzeugen nicht oder nur eingeschränkt durchführbar, da die meisten Fahrzeuge nicht über die hierfür nötigen Zusatzsysteme zur selbständiger Objekt- und Situationserkennung verfügen. Obwohl somit viele der heutigen Kraftfahrzeuge mittels der üblicherweise vorhandenen Assistenzsysteme (Tempomat, Lenkassistent, Bremsassistent etc.) - inklusive der zugehörigen Sensoren und Aktoren - zumindest theoretisch in der Lage wären, sich automatisiert zu bewegen bzw. einfach dazu umgerüstet werden könnten, scheitert ein Einsatz im allgemeinen Straßenverkehr aus technischer Sicht bislang meist an der Vielzahl an zu berücksichtigenden Szenarien, auf die es richtig zu reagieren gilt.

Anders stellt sich hingegen die Situation in vom allgemeinen Straßenverkehr abtrennten Bereichen, beispielsweise Verladeterminals, Lagerhallen oder landwirtschaftlich genutzten Flächen, dar. Aufgrund der dort herrschenden besser kontrollierbaren Umgebungsbedingungen in diesen Bereichen, scheint hier bereits in naher Zukunft mit den bestehenden Fahrzeugsystemen ein hoher Grad an Automatisierung erreicht werden zu können. In diesem Zusammenhang offenbart beispielsweise die Offenlegungsschrift DE 10 2012 222 562 A1 ein System für bewirtschaftete Parkflächen, bei welchem Kraftfahrzeuge ausgehend von einer Startposition autonom in eine Parkposition überführt werden, wobei die Bewegungsbahn von einer zentralen Recheneinheit berechnet und an die jeweiligen Kraftfahrzeuge übermittelt wird.

Im Rahmen der Erfindung wurde jedoch festgestellt, dass nachteilig an dieser Lösung ist, dass bei der Berechnung der Bewegungsbahn der Kraftfahrzeuge nicht explizit individuelle, d. h. fahrzeugspezifische, Kenngrößen, beispielsweise Fahrzeuglänge, Fahrzeugbreite oder Beladungszustand, berücksichtigt werden. Gerade dies ist allerdings für einen Einsatz eines derartigen Systems in Verladeterminals von Vorteil, da sich dort üblicherweise eine Vielzahl verschiedener Fahrzeuge (LKWs, LKWs mit Anhänger, Kleintransporter, Tankwägen etc.) mit entsprechend unterschiedlichen Wendekreisen, Schleppkurven und unterschiedlichem Platzbedarf aufhalten. Zudem führt die zentrale Berechnung der Bewegungsbahnen der Kraftfahrzeuge gemäß dem System der DE 10 2012 222 562 A1 bei vielen Verkehrsteilnehmern und dynamischen Umgebungen schnell zu sehr komplexen und damit zeitaufwendigen Rechnungen.

Aus der GB 2552020 A ist ferner eine Fahrzeug-Einparkhilfe bekannt, die ein Verwenden von Fahrzeugdaten umfasst. Dabei werden Fahrzeugdaten (wie z. B. die Fahrzeugbreite, Fahrzeugklänge, etc.) an eine Steuereinheit übertragen, welche sodann unter Verwendung der entsprechenden Fahrzeugdaten einen Abstellort innerhalb eines Parkplatzes bestimmt und diesen an das entsprechende Fahrzeug überträgt. Nachteilig ist auch hier allerdings, dass bei der Routenberechnung die Trajektorien anderer Fahrzeuge auf dem Parkplatz miteinbezogen werden, sodass sich hier wiederum bei vielen Verkehrsteilnehmern komplexe Berechnungen ergeben können.

Entsprechend ist es eine Aufgabe der Erfindung einen verbesserten Ansatz für ein zuverlässiges Überführen, vorzugsweise ein automatisiertes Überführen, eines Kraftfahrzeugs von einer aktuellen Position zu einer Zielposition bereitzustellen, mit dem Nachteile der herkömmlichen Techniken vermieden werden können. Insbesondere soll eine einfach zu implementierende Lösung bereitgestellt werden, mit der auch beim Vorhandensein unterschiedlicher Fahrzeugtypen und Fahrzeugklassen eine zuverlässige und effiziente Bestimmung individueller Bewegungsbahnen ermöglicht wird.

Diese Aufgaben werden durch ein Verfahren mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Das Verfahren sieht dabei ein Überführen, vorzugsweise ein automatisiertes Überführen, eines Kraftfahrzeugs von einer aktuellen Position zu einer Zielposition vor. Die aktuelle Position als auch die Zielposition befinden sich in einem vom allgemeinen Straßenverkehr abgetrennten Bereich, vorzugsweise in einem durch eine Schranken- und/oder Toranlage abgetrennten Bereich. Mit anderen Worten kann dieser Bereich beispielsweise ein Verladeterminal zum Güterumschlag, eine Produktionsanlage oder eine bewirtschaftete Stellfläche sein und/oder ein Bereich sein, der aufgrund der dort geltenden Zugangsbeschränkungen nicht von einem zufälligen Personenkreis genutzt werden kann.

Ferner ist das zu überführende Kraftfahrzeug in einem autonomen oder teil-autonomen ersten Fahrmodus M₁ betreibbar. In diesem führt das Kraftfahrzeug mithilfe eines Fahrerassistenzsystems selbsttätig eine, sowohl eine Längsführung als auch eine Querführung des Kraftfahrzeugs umfassende, Fahrzeugführung entlang einer Soll-Bahn durch. Dabei besteht die Möglichkeit, dass das Kraftfahrzeug erst auf dem vom allgemeinen Straßenverkehr abgetrennten Bereich in diesem ersten Fahrmodus M₁ betrieben wird, d. h., die Anfahrt zu diesem Bereich kann von einem menschlichen Fahrer gesteuert erfolgen und erst beim Aufenthalt im genannten Bereich, beispielsweise im Zuge der Be- bzw. Entladung, wird in einen Fahrmodus gewechselt, in dem die Präsenz eines Fahrers nicht mehr erforderlich ist.

Das Verfahren umfasst ferner die Schritte: Bestimmen einer Soll-Bahn von der aktuellen Position des Kraftfahrzeugs zur Zielposition des Kraftfahrzeugs durch die fahrzeugexterne Planungseinrichtung. Ein Übermitteln der von der fahrzeugexternen Planungseinrichtung bestimmten Soll-Bahn an das Kraftfahrzeug und ein Überführen des Kraftfahrzeugs von der aktuellen Position zur Zielposition im ersten Fahrmodus M₁ entlang der übermittelten Soll-Bahn.

Die Soll-Bahn wird somit nicht durch das Kraftfahrzeug selbst, sondern von der fahrzeugexternen Planungseinrichtung bestimmt. Dies ist vorteilhaft, da die externe Planungseinrichtung die möglichen Fahrtstrecken in dem vom allgemeinen Straßenverkehr abgetrennten Bereich kennt und eine Zielposition für das Kraftfahrzeug vorgeben kann, z. B. ein freie Verladeterminal.

Gemäß einem bevorzugten Ausführungsbeispiel der Erfindung können vor der Bestimmung der entsprechenden Bewegungsbahn zunächst fahrzeugspezifische Kenngrößen von dem Kraftfahrzeug an die Planungseinheit übermittelt werden, auf deren Basis dann die individuelle Bestimmung der Soll-Bahn erfolgt. Dadurch können auf vorteilhafte Weise unterschiedliche Wendekreise, Automatisierungsgrade und/oder Achslastverteilungen der Kraftfahrzeuge, aber auch eventuell überstehende Ladungen bei der Routenplanung berücksichtigt werden ohne dass zur Erfassung derartiger Parameter zusätzliche fahrzeugexterne Sensoreinrichtungen nötig sind. Insgesamt werden dadurch Betriebskosten reduziert sowie die Genauigkeit und Zuverlässigkeit der Bewegungsbahnbestimmung erhöht.

Gemäß diesem Ausführungsbeispiel umfasst das Verfahren hierzu die Schritte: ein Übermitteln mindestens einer Fahrzeuginformation, betreffend eine Eigenschaft des Kraftfahrzeugs, vom Kraftfahrzeug an eine fahrzeugexterne Planungseinrichtung und das Bestimmen einer Soll-Bahn von der aktuellen Position des Kraftfahrzeugs zur Zielposition des Kraftfahrzeugs durch die fahrzeugexterne Planungseinrichtung, wobei das Bestimmen der Soll-Bahn gemäß diesem Ausführungsbeispiel unter Berücksichtigung der übermittelten mindestens einen Fahrzeuginformation erfolgt.

Hierbei wird im Rahmen der vorliegenden Anmeldung davon ausgegangen, dass das Kraftfahrzeug über mindestens eine Schnittstelle zur digitalen Kommunikation mit fahrzeugexternen Einrichtungen verfügt, mittels der die entsprechenden Fahrzeuginformationen und die Soll-Bahn zwischen der fahrzeugexternen Planungseinrichtung und dem Kraftfahrzeug ausgetauscht werden können. Beispielsweise kann das Fahrzeug hierzu über eine drahtlose WLAN-Schnittstelle oder eine Schnittstelle basierend auch einem Standard des 3GPP-Projekts (3rd Generation Partnership Project (3GPP)), beispielsweise der 3. Generation (3G), der 4. Generation (4G) oder der 5. Generation (5G) verfügen.

Der Begriff "Soll-Bahn" im Rahmen der vorliegenden Anmeldung kann so verstanden werden, dass die Soll-Bahn eine räumliche Trajektorie, d. h. einen Bewegungspfad, darstellt. Der Begriff "Soll-Bahn" kann ferner so verstanden werden, dass die Soll-Bahn eine räumliche Trajektorie als auch eine zeitliche Information umfasst. Letztere kann dabei angeben zu welchem Zeitpunkt sich das Fahrzeug an einem bestimmten Punkt entlang der Trajektorie aufhalten soll. Die zeitliche Information kann allerdings auch beispielsweise in Form eines Geschwindigkeitsprofils entlang der Trajektorie bereitgestellt werden.

Ferner können die Fahrzeuginformationen, die eine Eigenschaft des Kraftfahrzeugs betreffend, spezifisch für das individuelle Kraftfahrzeug sein. Sie können allerdings auch spezifisch für den generellen Fahrzeugtyp und/oder die generelle Fahrzeugklasse sein. Darüber hinaus können die Fahrzeuginformationen in einem Speicher des Fahrzeugs, beispielsweise in Form von Kenngrößen, hinterlegt sein oder mittels entsprechender Messeinrichtungen, beispielsweise über einen Achslastsensor, qualitativ oder quantitativ vom Fahrzeug erfasst werden.

Gemäß einem weiteren Aspekt kann die mindestens eine Fahrzeuginformation eine erste Information umfassen, die eine Abmessung des Kraftfahrzeugs angibt oder aus der eine Abmessung des Kraftfahrzeugs ableitbar ist. Beispielsweise kann die erste Information eine Länge, eine Breite, eine Höhe, einen Radstand, eine Rahmenhöhe, eine Rahmenlänge, eine Überhanglänge, eine Bodenfreiheit und/oder ein sonstiges kennzeichnendes Längenmaß des Kraftfahrzeugs umfassen. Dabei kann die Abmessung sowohl ein Einzelfahrzeug als auch eine Fahrzeugkombination bzw. ein Fahrzeuggespann, beispielsweise ein Gliederzug aus einem Lastkraftwagen mit einem Anhänger, betreffen. Durch die Berücksichtigung derartiger Informationen bei der Bestimmung der Soll-Bahn wird auf vorteilhafte Weise die Genauigkeit und Zuverlässigkeit der Soll-Bahn-Bestimmung verbessert, da für jedes Kraftfahrzeug individuell unpassierbare Teilbereiche, beispielsweise, zu enge und/oder zu steile Streckenabschnitte, zu niedrige Brücken und/oder zu enge Kurven, gemieden bzw. von der Routenplanung ausgenommen werden können.

Zudem oder alternativ kann die mindestens eine Fahrzeuginformation eine zweite Information umfassen, die eine autonome Fahrfähigkeit des Kraftfahrzeugs charakterisiert. Beispielsweise kann die zweite Information einen maximalen Automatisierungsgrad, eine maximale autonome Fahrstufe, eine Rückwärtsfahrfähigkeit und/oder eine zulässige Fahrgeschwindigkeit im ersten Fahrmodus M₁ umfassen. Durch die Berücksichtigung derartiger Informationen bei der Bestimmung der Soll-Bahn lässt sich ebenfalls auf vorteilhafte Weise die Genauigkeit und Zuverlässigkeit der Soll-Bahn-Bestimmung verbessern, da die errechnete Stecke individuell an die jeweiligen Fahrzeugfähigkeiten angepasst werden kann. Beispielsweise können für Kraftfahrzeuge ohne autonome Rückfahrfunktion nur derartige Soll-Bahnen berechnet werden, bei welchen ein Rückwärtsfahren nicht notwendig ist. Zum anderen kann die zulässige Fahrgeschwindigkeit im autonomen Fahrmodus der Kraftfahrzeuge beispielsweise für die Taktung des Passierens von Engstellen verwendet werden. Durch die Berücksichtigung des maximalen Automatisierungsgrads bei der Soll-Bahn-Berechnung des Verfahrens können zudem auf vorteilhafte Weise auch Fahrzeuge mit verschiedenen Stufen der Automatisierung gleichzeitig auf demselben Gelände überführt werden.

Zudem oder alternativ kann die mindestens eine Fahrzeuginformation auch eine dritte Information umfassen, die einen Beladungszustand des Kraftfahrzeugs betrifft. Beispielsweise kann die dritte Information eine Angabe, eine Art, ein Gewicht und/oder eine Verteilung einer Ladung des Kraftfahrzeugs und/oder eine Art eines Aufliegers des Kraftfahrzeugs angeben. Auch die Berücksichtigung derartiger Informationen bei der Bestimmung der Soll-Bahn trägt auf vorteilhafte Weise dazu bei, dass die Genauigkeit und Zuverlässigkeit der Soll-Bahn-Bestimmung verbessert wird, da Teilbereiche mit einem höchstzulässigen Gesamtgewicht, beispielsweise Brücken, oder zu steile Streckenabschnitte individuell gemieden bzw. von der Routenplanung ausgenommen werden können.

Um die Bestimmung der Soll-Bahn noch weiter zu verbessern, kann das Verfahren nach einem weiteren Aspekt der Erfindung den Schritt des Übermittels mindestens einer vom Kraftfahrzeug sensorisch erfassten Umgebungsinformation vom Kraftfahrzeug an die fahrzeugexterne Planungseinrichtung umfassen. Ferner kann das Bestimmen der Soll-Bahn der aktuellen Position des Kraftfahrzeugs zur Zielposition des Kraftfahrzeugs durch die fahrzeugexterne Planungseinrichtung unter Berücksichtigung dieser übermittelten mindestens einen Umgebungsinformation erfolgen. Hierbei können zum Erfassen der Umgebungsinformation die heutzutage oftmals serienmäßig in Kraftfahrzeugen verbauten Umfeldsensoren, beispielsweise Radar-, Lidar-, Ultraschall-, Infrarot- und/oder Kamerasysteme genutzt werden. Auf vorteilhafte Weise lassen sich so Veränderungen auf den Strecken in dem vom allgemeinen Straßenverkehr abtrennten Bereich, die der fahrzeugexternen Planungseinrichtung nicht bzw. noch nicht bekannt sind, beispielsweise ein umgestürzter Container oder eine Ölspur, erkennen und bei der Soll-Bahn-Bestimmung berücksichtigen. Dadurch wird wiederum die Sicherheit und Zuverlässigkeit des Verfahrens erhöht, da die Soll-Bahnen um diese Hindernisse herum geplant werden können.

Zudem oder alternativ können auch durch fahrzeugexterne Sensoren erfasste und an die fahrzeugexterne Planungseinrichtung übermittelte Umgebungsinformationen bei der Soll-Bahn-Bestimmung berücksichtigt werden. Entsprechend kann dann das beanspruchte Verfahren dann die folgenden Schritte umfassen: ein Übermitteln mindestens von einer fahrzeugexternen Sensoreinrichtung erfassten Umgebungsinformation von der Sensoreinrichtung an die fahrzeugexterne Planungseinrichtung und ein Bestimmen der Soll-Bahn von der aktuellen Position des Kraftfahrzeugs zur Zielposition des Kraftfahrzeugs durch die fahrzeugexterne Planungseinrichtung unter Berücksichtigung der übermittelten mindestens einen Umgebungsinformation.

Zur Vermeidung unnötigen Datenverkehrs werden vorzugsweise die erfassten Umgebungsinformationen allerdings nicht ständig an die fahrzeugexterne Planungseinrichtung übersandt, sondern nur im Falle, dass ein Hindernis erkannt wurde. Aus diesem Grund kann gemäß einer Weiterbildung der Erfindung die vom Kraftfahrzeug mindestens eine sensorisch erfasste Umgebungsinformation eine Informationen betreffend ein erfasstes Hindernis sein. Das Hindernis kann hierbei beispielsweise ein vom Kraftfahrzeug erfasstes Fremdfahrzeug, ein Fußgänger, und/oder ein auf der Fahrbahn liegendes oder angrenzendes Objekt sein. Ferner kann die Informationen betreffend ein erfasstes Hindernis eine Position, Ausdehnung und/oder zeitliche Veränderung des Hindernisses umfassen. Das Erkennen, dass ein Hindernis vorliegt, ist mit den meist serienmäßig verbauten Sensorsystem und der entsprechenden Software der Assistenzsysteme in der Regel möglich, wobei dies beispielsweise auf Basis der Größe des erfassten Objekts oder dessen Reflexionsverhaltens erfolgt. Dadurch kann zuverlässig zwischen unkritischen Objekten (z. B. Regen) und Hindernissen (z. B. ein anderes Fahrzeug) unterschieden werden. Die Übermittlung von Hindernisinformationen an die fahrzeugexterne Planungseinrichtung verbessert dabei auf vorteilhafte Weise die Routenplanung, da die Hindernis-Informationen so auch bei der Soll-Bahn-Berechnung anderer Fahrzeuge zur Verfügung steht ohne, dass sich die Hindernisse bereits im Erfassungsbereich ihrer jeweiligen Sensoren befinden müssen.

Zur weiteren Erhöhung der Sicherheit kann das Verfahren nach einem weiteren Aspekt der Erfindung den Schritt des Ermittelns, ob eine Konfliktsituation, vorzugsweise eine Gefahrensituation, beim Überführen des Kraftfahrzeugs von der aktuellen Position zur Zielposition im ersten Fahrmodus M₁ entlang der übermittelten Soll-Bahn vorliegt, umfassen. Dabei kann die Konfliktsituation vorzugsweise eine drohende Kollision mit einem Hindernis sein. Das Ermitteln, ob eine Konfliktsituation vorliegt, kann dabei durch die fahrzeugexterne Planungseinrichtung erfolgen. In einer besonders vorteilhaften Ausführungsform kann das Ermitteln jedoch auch durch das Fahrzeug selbst erfolgen, wodurch das Datenaufkommen zwischen Fahrzeug und fahrzeugexterner Planungseinrichtung reduziert werden kann. Vorzugsweise erfolgt hierbei das Ermittelns einer Konfliktsituation ununterbrochen während des Überführen des Kraftfahrzeugs von der aktuellen Position zur Zielposition. Insgesamt wird so auf vorteilhafte Weise die Sicherheit und Zuverlässigkeit des Verfahrens erhöht.

Gemäß einer Weiterbildung dieses Aspekts kann beim Vorliegen einer Konfliktsituation, weil z. B. ein Objekt die Fahrbahn versperrt, ein Aktualisieren und/oder Neu-Bestimmen der Soll-Bahn erfolgen. Dabei kann das Aktualisieren eine Änderung der räumlichen Komponente der Soll-Bahn, d. h. der Trajektorie, aber auch eine Änderung der zeitlichen Komponente umfassen. Letztere kann beispielsweise in Form einer Verlangsamung, Stopp-Anweisung oder sonstigen Veränderung des Geschwindigkeitsprofils erfolgen. Die Aktualisierung und/oder Neu-Bestimmen der Soll-Bahn kann ferner durch das Kraftfahrzeug selbst oder durch die fahrzeugexterne Planungseinrichtung erfolgen. Im letzteren Fall ist auch das entsprechende Übermitteln der hierfür notwenigen Informationen vorgesehen. Durch diese zusätzliche Absicherung wird auf vorteilhafte Weise ein Kollidieren von Fahrzeugen mit Hindernissen aller Art verhindert, wodurch sich wiederum die Sicherheit und Zuverlässigkeit des Verfahrens erhöht.

Nach einem weiteren Aspekt der Erfindung kann das Kraftfahrzeug in einem zweiten Fahrmodus M₂ ferngesteuert betreibbar sein. In diesem Fahrmodus wird das Kraftfahrzeug von einer fahrzeugexternen Bedienperson ferngesteuert, derart, dass die fahrzeugexterne Bedienperson zumindest einen Teil der Fahrzeugführung des Kraftfahrzeugs selbst durchführt. Mit anderen Worten kann durch eine menschliche Bedienperson im Wesentlichen in Echtzeit Einfluss auf die Fahrzeugführung genommen werden, ohne dass sich diese Bedienperson in unmittelbarer Nähe zum Fahrzeug aufhalten muss. Beispielsweise kann die Fernsteuerung mittels Teleoperation erfolgen. Auf vorteilhafte Weise können so schwierige bzw. komplexe Fahrmanöver von einem Menschen, beispielsweise aus erhöhten Positionen mit besserer Sicht, durchgeführt werden.

Um ferner auf plötzlich auftretende Gefahrensituationen schnell reagieren zu können, kann gemäß einer Weiterbildung der Erfindung das Kraftfahrzeug von einer fahrzeugexternen Bedienperson im zweiten Fahrmodus M₂ betrieben werden, falls ein Vorliegen einer Konfliktsituation ermittelt wurde. Vorzugsweise ist dies dann der Fall, falls ein Vorliegen einer vorbestimmten Konfliktsituation ermittelt wurde. Beispielsweise kann das Fernsteuern dann erfolgen, wenn die Kollision zweier Kraftfahrzeuge droht. In diesem Fall könnte durch ein gleichzeitiges unabhängiges Aktualisieren bzw. Neu-Berechnen der Soll-Bahnen eine Endlosschleife bzw. eine Sackgassen-Situation entstehen, die durch ein gezieltes kurzes Fernsteuern der Fahrzeuge umgangen werden kann. Weitere vorbestimmte Konfliktsituationen können beispielsweise das Passieren einer Engstelle, der Ausfall einer Sensoreinheit des Kraftfahrzeugs und/oder die Erfassung einer Person in der Umgebung des Kraftfahrzeugs sein.

Um ferner den Rechenaufwand des Verfahrens auch für den Fall, dass sich mehrere Kraftfahrzeuge auf dem vom allgemeinen Straßenverkehr abgetrennten Bereich befinden, möglichst gering zu halten, kann gemäß einem weiten Aspekt des erfindungsgemäßen Verfahrens vorgesehen sein, dass, falls sich mindestens ein weiteres Kraftfahrzeug in dem vom allgemeinen Straßenverkehr abgetrennten Bereich befindet, der Schritt des Bestimmens der Soll-Bahn des Kraftfahrzeugs durch die fahrzeugexterne Planungseinrichtung unabhängig vom Schritt des Bestimmens der Soll-Bahn des mindestens einen weiteren Kraftfahrzeugs, erfolgt. Dabei können durchaus Umgebungsinformationen, vorzugsweise Standortdaten, der weiteren Fahrzeuge bei der Bestimmung der Soll-Bahn berücksichtigt werden, jedoch erfolgt die Soll-Bahn-Bestimmung selbst unabhängig von der der weiteren Fahrzeuge. Mit anderen Worten wird somit nicht ein möglichst globales Optimum aller Soll-Bahnen der Kraftfahrzeuge durch eine simultane Bestimmung bzw. Berechnung aller Routen ermittelt, was bei mehreren Fahrzeugen bekanntlich ein durchaus rechenaufwändiges und komplexes Problem darstellt. Demgegenüber ist die beanspruchte unabhängige Bestimmung der Soll-Bahnen hingegen auf vorteilhafte Weise leicht zu implementieren und kann somit auch zur gleichzeitigen Überführung einer Vielzahl von Kraftfahrzeugen verwendet werden. Allerdings birgt dieser Aspekt des Verfahrens auch das Risiko, dass Konfliktsituationen, beispielsweise Kollisionen, zwischen den Fahrzeugen auftreten können. Vorzugsweise erfolgt daher zusätzlich eine Konfliktüberwachung und/oder eine Konfliktauflösung, z. B. durch Teleoperation, wie oben beschrieben.

Nach einem weiteren Aspekt der Erfindung kann, falls sich mindestens ein weiteres Kraftfahrzeug in dem vom allgemeinen Straßenverkehr abgetrennten Bereich befindet, das Bestimmen der Soll-Bahn des Kraftfahrzeugs durch die fahrzeugexterne Planungseinrichtung zusätzlich unter Berücksichtigung der übermittelten Umgebungsinformationen des mindestens eines weiteren Kraftfahrzeugs erfolgen. Mit anderen Worten stehen die von den einzelnen Fahrzeugen erfassten und an die fahrzeugexterne Planungseinrichtung übermittelten Umgebungsinformationen bei der Soll-Bahn-Bestimmung aller Fahrzeuge zur Verfügung. Zudem oder alternativ kann das Bestimmen der Soll-Bahn des Kraftfahrzeugs durch die fahrzeugexterne Planungseinrichtung auch unter Berücksichtigung der übermittelten Fahrzeuginformation des mindestens eines weiteren Kraftfahrzeugs erfolgen. Auf vorteilhafte Weise kann so insgesamt die Soll-Bahn-Bestimmung aller Fahrzeuge optimiert werden, da bei der jeweiligen Bestimmung der Soll-Bahn auch Informationen außerhalb des eigentlichen Informationshorizonts der einzelnen Fahrzeuge zu Verfügung stehen.

Um auf vorteilhafte Weise eine möglichst dezentrale und damit ausfallsichere Architektur der Planungseinrichtung zu erreichen, kann nach einem weiteren Aspekt der Erfindung, falls sich mindestens ein weiteres Kraftfahrzeug in dem vom allgemeinen Straßenverkehr abgetrennten Bereich befindet, jedem der Kraftfahrzeuge ein, vorzugsweise logisches, Rechenmodul der fahrzeugexternen Planungseinrichtung zugeordnet sein, das die Soll-Bahn für das jeweilige Kraftfahrzeug ermittelt. Die fahrzeugexterne Planungseinrichtung kann somit als dezentrales System aufgefasst werden. Dabei können die einzelnen Rechenmodule in Form logischer Untereinheiten einer zentralen Recheneinheit, aber auch als unabhängige Computer, die über keinen gemeinsamen Speicher verfügen und nur über Nachrichten miteinander kommunizieren, ausgebildet sein. Um eine Kommunikation zwischen den einzelnen Rechenmodulen zu ermöglichen, können diese jeweils eine entsprechende Schnittstelle, beispielsweise eine Netzwerkschnittstelle oder drahtlose WLAN-Schnittstelle, umfassen. Insgesamt wird durch die Unabhängigkeit der dezentralen Rechenmodule auf vorteilhafte Weise die Ausfallsicherheit und Zuverlässigkeit des Verfahrens erhöht.

Gemäß einem weiteren Aspekt der Erfindung kann die mindestens eine Fahrzeuginformation eine vierte Information umfassen, die eine Leistungsinformation eines Antriebsstrangs des Kraftfahrzeugs betreffen kann. Beispielsweise kann die vierte Information ein maximales Antriebsmoment, eine verfügbare Motorleistung und/oder Getriebe-Schaltzeiten betreffen. Durch die Berücksichtigung derartiger Informationen bei der Bestimmung der Soll-Bahn lässt sich auf vorteilhafte Weise die Genauigkeit und Zuverlässigkeit der Soll-Bahn-Bestimmung verbessern, da die errechnete Stecke individuell an die jeweiligen Fahrzeugfähigkeiten angepasst werden kann. Beispielsweise kann durch die Kenntnis der Getriebe-Schaltzeiten und der verfügbare Motorleistung die zeitliche Taktung von Fahrzeugen auf bestimmten Streckenabschnitten optimiert werden, was somit die Effizienz des Verfahrens erhöht.

Um eine möglichst verbrauchseffiziente Überführung des Kraftfahrzeugs zu ermöglichen, kann die mindestens eine Fahrzeuginformation zudem oder alternativ eine fünfte Information umfassen, die einen Kraftstoffverbrauch des Kraftfahrzeugs in Abhängigkeit des eingelegten Gangs, dessen Beladungszustand und/oder dessen Geschwindigkeit angibt. Auf Basis dieser Information kann dann eine möglichst kraftstoff- und/oder energiesparende Soll-Bahn bestimmt werden, wodurch auf vorteilhafte Weise Ressourcen und Betriebskosten eingespart werden können.

Zudem oder alternativ kann die mindestens eine Fahrzeuginformation eine sechste Information umfassen, die die aktuelle Position des Kraftfahrzeugs angibt und/oder aus der die aktuelle Position des Kraftfahrzeugs ableitbar ist. Im Rahmen dieses Aspekts wird davon ausgegangen, dass das Kraftfahrzeug hierbei über eine entsprechende Einheit zur Positionsbestimmung, beispielsweise ein satellitengestütztes-Navigationssystem, z. B. GPS, verfügt. Dadurch kann auf vorteilhafte Weise die Flexibilität des Verfahrens erhöht werden, da die Fahrzeuge beispielsweise nicht auf bestimmten Startbereichen abgestellt werden müssen.

Nach einem weiteren Aspekt der Erfindung handelt es sich bei dem vom allgemeinen Straßenverkehr, vorzugsweise durch eine Schranken- und/oder Toranlage, abgetrennten Bereich um ein Privatgelände und/oder um einen Bereich, der aufgrund von Zugangsbeschränkungen nicht von einem zufälligen Personenkreis genutzt werden kann. Gemäß einem weiteren Aspekt der Erfindung handelt es sich bei dem vom allgemeinen Straßenverkehr abgetrennten Bereich um ein Verladeterminal zum Güterumschlag, um eine bewirtschaftete Stellfläche und/oder um einen Bereich, in dem eine maximale Höchstgeschwindigkeit von 50 km/h, vorzugsweise 30 km/h, gilt. Darüber hinaus kann es sich bei dem genannten Bereich auch um eine Lagergelände, ein Produktionsgelände, eine landwirtschaftlich genutzte Fläche, ein Minengelände und/oder ein Hafengelände handeln. All diese Einschränkungen stellen dabei auf vorteilhafte Weise sicher, dass die Umgebungsbedingungen besser kontrolliert werden können, weil beispielsweise nur einer bestimmten Anzahl an Personen und/oder Kraftfahrzeugen der Zutritt zum Betriebsbereich erlaubt werden kann. Dadurch wird insgesamt die Sicherheit und Ausführbarkeit des Verfahrens erhöht.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben Es zeigen:
- Figur 1:: ein Flussdiagramm des Verfahrens zum Überführen eines Kraftfahrzeugs von einer aktuellen Position zu einer Zielposition gemäß einer Ausführungsform der Erfindung;
- Figur 2:: ein Flussdiagramm des Verfahrens zum Überführen eines Kraftfahrzeugs von einer aktuellen Position zu einer Zielposition gemäß einer weiteren Ausführungsform der Erfindung;
- Figur 3:: eine schematische Darstellung von Kraftfahrzeugen auf einem vom allgemeinen Straßenverkehr abgetrennten Bereich, die gemäß einer Ausführungsform des Verfahrens zu ihrer jeweiligen Zielposition überführt werden; und
- Figur 4:: eine schematische Darstellung des dezentralen Austauschs von Umgebungsinformationen zwischen Rechenmodulen der fahrzeugexternen Planungseinrichtung gemäß einer Ausführungsform der Erfindung.

Gleiche oder funktional äquivalente Elemente sind in allen Figuren mit denselben Bezugszeichen beschrieben und zum Teil nicht gesondert beschrieben.

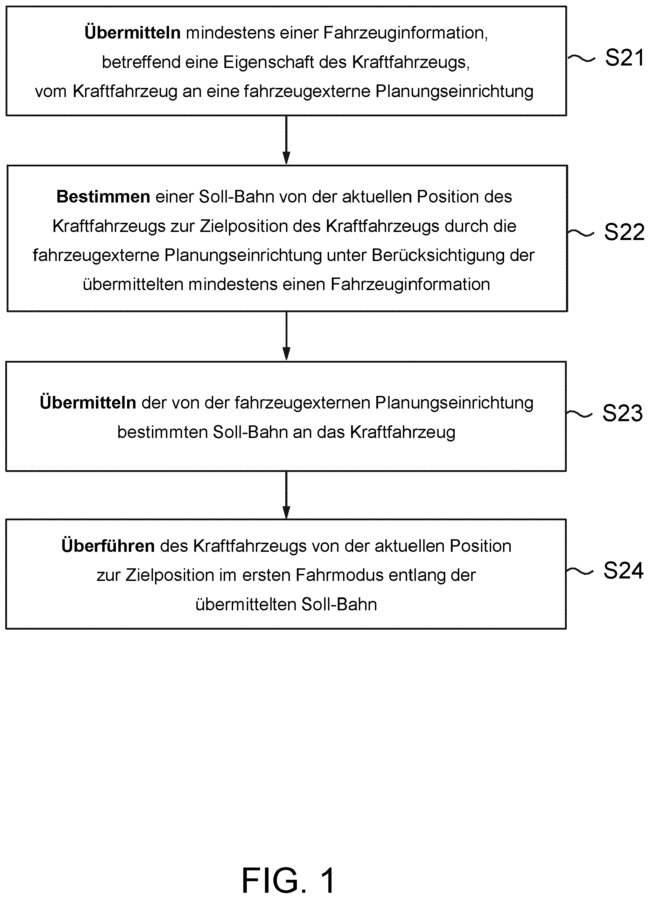

Figur 1 zeigt ein Flussdiagramm des Verfahrens zum Überführen eines Kraftfahrzeugs 2a, 2b, 2c von einer aktuellen Position zu einer Zielposition gemäß einer Ausführungsform der Erfindung. Erfindungsgemäß umfasst das Verfahren hierbei die Schritte S21 bis S24. Im Schritt S21 erfolgt ein Übermitteln mindestens einer Fahrzeuginformation, betreffend eine Eigenschaft des Kraftfahrzeugs 2a, 2b, 2c, vom Kraftfahrzeug 2a, 2b, 2c an eine fahrzeugexterne Planungseinrichtung 10. Die Fahrzeuginformation kann beispielsweise eine Abmessung des Kraftfahrzeugs (z. B. dessen Länge), eine autonome Fahrfähigkeit des Kraftfahrzeugs (z. B. dessen maximale autonome Fahrstufe), oder einen Beladungszustand des Kraftfahrzeugs (z. B. dessen Gewicht) charakterisieren. Zur Übermittlung der entsprechenden Fahrzeuginformationen kann das Kraftfahrzeug 2a, 2b, 2c über eine entsprechende Kommunikationseinrichtung 5a, 5b, 5c zum drahtlosen Datenaustausch, beispielsweise in Form einer drahtlosen WLAN-Schnittstelle, und die fahrzeugexterne Planungseinrichtung 10 über eine eigene entsprechende Kommunikationseinrichtung 9 verfügen.

Anschließend erfolgt im Schritt S22 ein Bestimmen einer Soll-Bahn 4a, 4b, 4c von der aktuellen Position des Kraftfahrzeugs 2a, 2b, 2c zur Zielposition des Kraftfahrzeugs 2a, 2b, 2c durch die fahrzeugexterne Planungseinrichtung 10 unter Berücksichtigung der übermittelten mindestens einen Fahrzeuginformation. Zur Soll-Bahn-Bestimmung können dabei an sich im Stand der Technik bekannte Verfahren genutzt werden, beispielsweise basierend auf dem Dijkstra-Algorithmus, wobei die übermittelte mindestens einen Fahrzeuginformation eine zusätzliche Randbedingung darstellt. Dadurch kann auf vorteilhafte Weise für das jeweilige Fahrzeug 2a, 2b, 2c eine individuelle Route bestimmt werden, die beispielsweise zu enge und/oder zu steile Streckenabschnitte, zu niedrige Brücken und/oder zu enge Kurven für dieses spezielle Fahrzeug 2a, 2b, 2c meidet.

Im Schritt S23 wird die von der fahrzeugexternen Planungseinrichtung 10 bestimmte Soll-Bahn 4a, 4b, 4c an das Kraftfahrzeug 2a, 2b, 2c übermittelt. Dies kann dabei wiederum über die entsprechende Fahrzeug-Kommunikationseinrichtung 5a, 5b, 5c und die fahrzeugexterne Kommunikationseinrichtung 9 der Planungseinrichtung 10 erfolgen. Entlang dieser übermittelten Soll-Bahn 4a, 4b, 4c wird dann im Schritt S24 das Kraftfahrzeugs 2a, 2b, 2c von der aktuellen Position zur Zielposition in einem ersten Fahrmodus M₁ überführt. In diesem Fahrmodus M₁ führt das Kraftfahrzeug 2a, 2b, 2c mithilfe eines Fahrerassistenzsystems selbsttätig eine, sowohl eine Längsführung als auch eine Querführung des Kraftfahrzeugs 2a, 2b, 2c umfassende, Fahrzeugführung entlang der Soll-Bahn 4a, 4b, 4c durch. Mit anderen Worten erfolgt das Überführen des Fahrzeugs in einem autonomen, d. h. vollautomatischen, oder teil-autonomen Betrieb, in dem vorzugsweise eine Präsenz eines Fahrers nicht erforderlich ist.

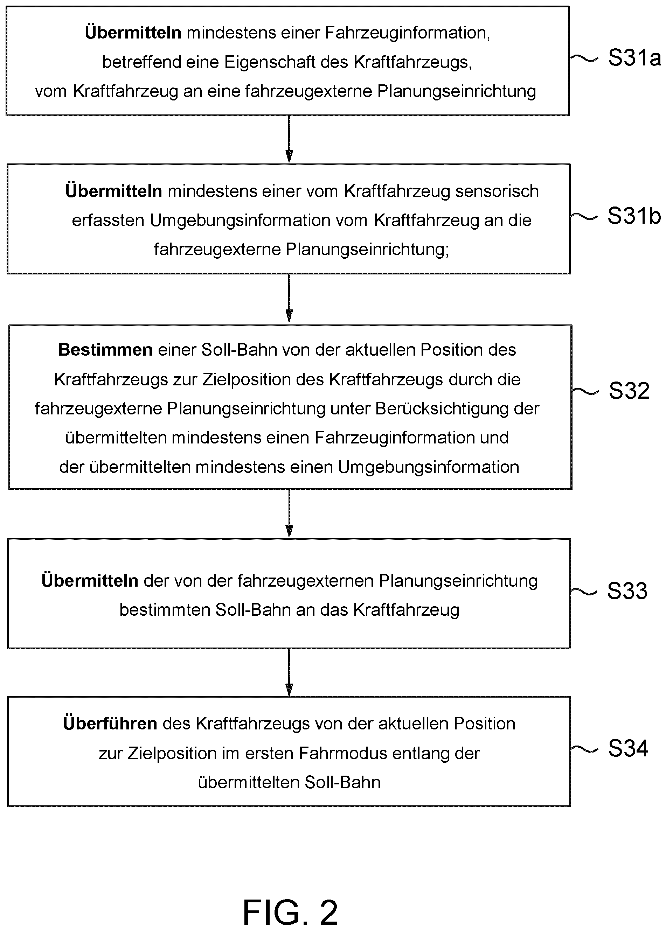

Figur 2 zeigt ein Flussdiagramm des beanspruchten Verfahrens gemäß einer weiteren Ausführungsform der Erfindung. Die Schritte S31a, S33 und S34 entsprechend dabei den Schritten S21, S22 und S24 der vorherigen Ausführungsform in Figur 1. Zusätzlich zur Ausführungsform der Figur 1 umfasst diese Variante allerdings noch den Schritt S31b, in dem mindestens eine vom Kraftfahrzeug 2a, 2b, 2c sensorisch erfassten Umgebungsinformation vom Kraftfahrzeug 2a, 2b, 2c an die fahrzeugexterne Planungseinrichtung 10 übermittelt wird. Die Umgebungsinformation kann dabei beispielsweise eine Position, Ausdehnung und/oder zeitliche Veränderung eines weiteren Fahrzeugs 2a, 2b, 2c, eines Fußgängers oder eines auf der Fahrbahn liegendes oder angrenzendes Objekt 7 sein. Zur Erfassung der Umgebungsinformation können heutzutage oftmals serienmäßig in Kraftfahrzeugen verbauten Umfeldsensoren 6a, 6b, 6c, beispielsweise Radar-, Lidar-, Ultraschall-, Infrarot- und/oder Kamerasysteme genutzt werden. Auf vorteilhafte Weise lassen sich so Veränderungen auf den Strecken in dem vom allgemeinen Straßenverkehr abtrennten Bereich 1, die der fahrzeugexternen Planungseinrichtung 10 nicht bzw. noch nicht bekannt sind, beispielsweise ein umgestürzter Container oder ein auf der Fahrtstrecke liegendes Objekt erkennen.

Diese erfassten Umgebungsinformationen werden dann im Schritt S32 zusätzlich zu den übermittelten Fahrzeuginformationen bei der Bestimmung der Soll-Bahn 4a, 4b, 4c von der aktuellen Position des Kraftfahrzeugs 2a, 2b, 2c zur Zielposition des Kraftfahrzeugs 2a, 2b, 2c durch die fahrzeugexterne Planungseinrichtung 10 berücksichtigt. Beispielsweise kann die Soll-Bahn 4a, 4b, 4c so um ein von einem Kamerasystem des Kraftfahrzeugs 2a, 2b, 2c erfasstes Hindernis herum geplant werden. Auf vorteilhafte Weise wird so die Sicherheit und Zuverlässigkeit des Verfahrens erhöht.

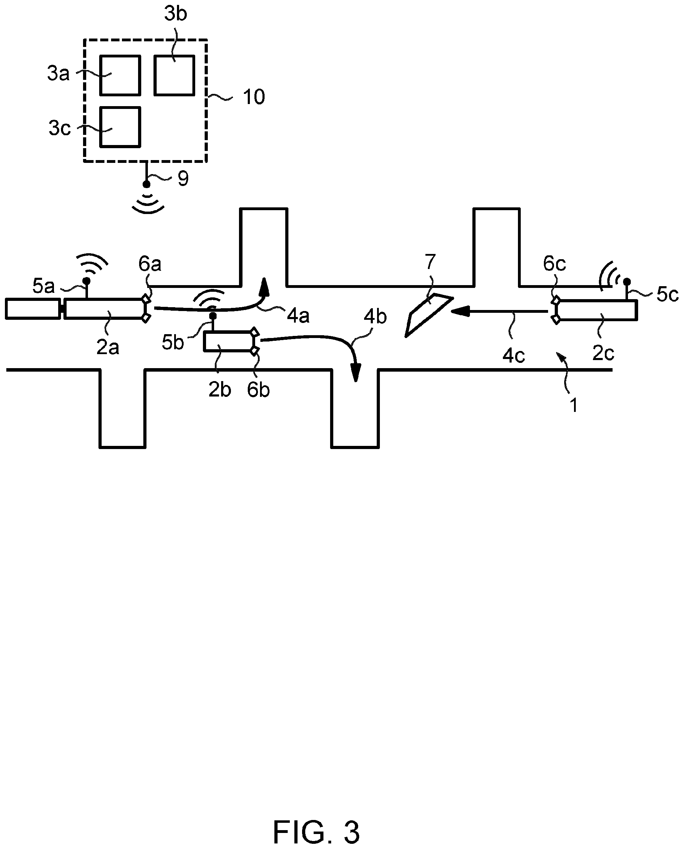

Figur 3 zeugt eine schematische Darstellung von drei unterschiedlich langen Kraftfahrzeugen 2a, 2b, 2c, die sich auf einem vom allgemeinen Straßenverkehr abgetrennten Bereich 1, vorliegend ein Verladeterminal zum Güterumschlag, befinden und gemäß einer Ausführungsform des Verfahrens zu ihrer jeweiligen Zielposition überführt werden. Jedes der drei Kraftfahrzeuge 2a, 2b, 2c ist autonom betreibbar und umfasst jeweils eine Sensoreinrichtung zur Umfelderfassung 6a, 6b, 6c sowie eine Kommunikationseinrichtung 5a, 5b, 5c zum digitalen Datenaustausch. Mittels letzterer stehen die Kraftfahrzeuge 2a, 2b, 2c in Kontakt mit einer fahrzeugexternen Planungseinrichtung 10, die hierzu ebenfalls über eine entsprechende Kommunikationseinrichtung 9 verfügt. Ferner umfasst die fahrzeugexternen Planungseinrichtung 10 drei logische Rechenmodule 3a, 3b, 3c die jeweils einem der Kraftfahrzeuge 2a, 2b, 2c zugeordnet sind. Mit anderen Worten erfolgt durch das Rechenmodul 3a die Soll-Bahn-Bestimmung des Fahrzeugs 2a, durch das Rechenmodul 3b die Soll-Bahn-Bestimmung des Fahrzeugs 2b und durch das Rechenmodul 3c die Soll-Bahn-Bestimmung des Fahrzeugs 2c.

Im Folgenden soll das Verfahren gemäß dieser Ausführungsform exemplarisch für das Kraftfahrzeug 2a genauer beschrieben werden. Nach dessen Einfahrt in den vom allgemeinen Straßenverkehr abgetrennten Bereich 1 übermittelt das Kraftfahrzeug 2a Fahrzeuginformationen betreffend seine Länge, Höhe, Art der Ladung und Automatisierungsgrad an die fahrzeugexterne Planungseinrichtung 1, bzw. genauer an das diesem Kraftfahrzeug 2a zugeordneten Rechenmodul 3a. Dieses bestimmt dann auf Basis der übermittelten Fahrzeuginformationen sowie unter Berücksichtigung von Geodaten des Verladegeländes, der Verfügbarkeit einzelner Terminals und der Position von Hindernissen 7, die von weiteren Kraftfahrzeugen 2b, 2c an die fahrzeugexterne Recheneinheit übermitteltet wurden, eine individuelle Soll-Bahn 4a von der aktuellen Position des Kraftfahrzeugs 2a zu dessen vom Rechenmodul 3a zugewiesenen Zielposition. Dabei erfolgt die Bestimmung der Soll-Bahn 4a unabhängig von der Bestimmung der Soll-Bahnen 4b, 4c der weiteren Kraftfahrzeuge 2b, 2c, die ebenfalls mit demselben erfindungsgemäßen Verfahren überführt werden. Aufgrund dieser unabhängigen Bestimmung können während des Überführens des Kraftfahrzeugs 2a zur Zielposition eventuell Zusammenstöße mit den weiteren Kraftfahrzeugen 2b, 2c auf dem Verladegelände drohen. Aus diesem Grund wird während des gesamten autonomen Überführens des Kraftfahrzeugs 2a von der aktuellen Position zur Zielposition ständig mittels der Sensoreinrichtung zu Umfelderfassung 6a des Kraftfahrzeugs 2a überwacht, ob eine Kollision mit einem weiteren Fahrzeug 2b, 2c oder einem anderen bei der Soll-Bahn-Bestimmung noch unbekanntem Hindernis droht. Ist dies der Fall, wird das Kraftfahrzeug 2a gestoppt und eine Neu-Berechnung der Soll-Bahn 4a durchgeführt oder alternativ das Kraftfahrzeug 2a mittels Teleoperation von einer fahrzeugexternen Bedienperson ferngesteuert bis die Konfliktsituation überwunden ist. Insgesamt wird dadurch ein genaues und zuverlässiges Verfahren zum automatisierten Überführen eines Kraftfahrzeugs bereitgestellt, das einfach zu implementieren ist.

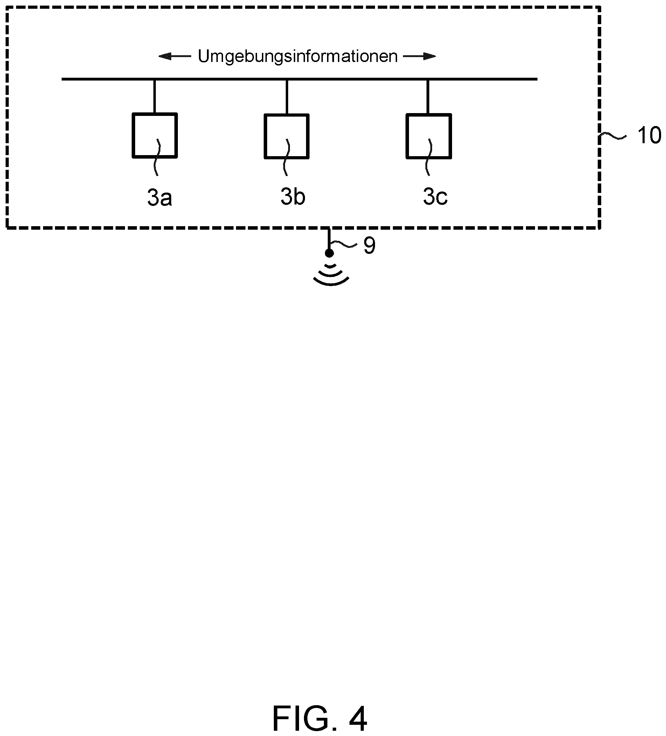

Figur 4 verdeutlicht in einer schematischen Darstellung nochmals den dezentralen Austausch von Umgebungsinformationen zwischen den Rechenmodulen 3a, 3b, 3c der fahrzeugexternen Planungseinrichtung 10 gemäß einer Ausführungsform der Erfindung. Die Rechenmodulen 3a, 3b, 3c sind im vorliegenden Fall als ein dezentrales System in Form logischer Untereinheiten einer zentralen Recheneinheit ausgebildet. Die Rechenmodule 3a, 3b, 3c können aber auch als unabhängige Computer, die über keinen gemeinsamen Speicher verfügen und nur über Nachrichten miteinander kommunizieren, ausgebildet sein. Die einzelnen Rechenmodule 3a, 3b, 3c sind jeweils nur einem Kraftfahrzeug 2a, 2b, 2c zugeordnet, kommunizieren mit dem jeweiligem Fahrzeug 2a, 2b, 2c über eine gemeine Kommunikationseinrichtung 9. Alternativ kann aber auch jedes der Rechenmodule 3a, 3b, 3c über eine eigene Kommunikationseinrichtung verfügen. Ferner stehen die einzelnen Rechenmodule 3a, 3b, 3c untereinander jeweils über eine Schnittstelle zur digitalen Kommunikation, im vorliegenden Fall eine Netzwerkschnittstelle, in Kontakt und tauschen Umgebungsinformationen, die die jeweilige Rechenmodule 3a, 3b, 3c von ihren jeweils zugeordneten Fahrzeugen 2a, 2b, 2c empfangen haben, aus. Zudem oder alternativ können die Rechenmodule 3a, 3b, 3c allerdings auch Fahrzeuginformationen, die die jeweilige Rechenmodule 3a, 3b, 3c von ihren jeweils zugeordneten Fahrzeugen 2a, 2b, 2c empfangen haben, über das Netzwerk austauschen. In beiden Fällen kann so die Soll-Bahn-Bestimmung aller Fahrzeuge optimiert werden, da bei der jeweiligen Bestimmung der Soll-Bahn auch Informationen außerhalb des eigentlichen Informationshorizonts der einzelnen Fahrzeuge zu Verfügung stehen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Vom allgemeinen Straßenverkehr abgetrennter Bereich
- 2a, 2b, 2c: Kraftfahrzeug
- 3a, 3b, 3c: Rechenmodul
- 4a, 4b, 4c: Soll-Bahn
- 5a, 5b, 5c: Kommunikationseinrichtung
- 6a, 6b, 6c: Sensoreinrichtung zur Umfelderfassung
- 7: Hindernis
- 9: Fahrzeugexterne Kommunikationseinrichtung
- 10: Fahrzeugexterne Planungseinrichtung

## Patentansprüche

1. Verfahren zum Überführen eines Kraftfahrzeugs (2a, 2b, 2c) von einer aktuellen Position zu einer Zielposition,
wobei sich sowohl die aktuelle Position als auch die Zielposition in einem vom allgemeinen Straßenverkehr, vorzugsweise durch eine Schranken- und/oder Toranlage, abgetrennten Bereich (1) befinden und
wobei das Kraftfahrzeug (2a, 2b, 2c) in einem autonomen oder teil-autonomen ersten Fahrmodus M₁ betreibbar ist, in welchem das Kraftfahrzeug (2a, 2b, 2c) mithilfe eines Fahrerassistenzsystems selbsttätig eine, sowohl eine Längsführung als auch eine Querführung des Kraftfahrzeugs (2a, 2b, 2c) umfassende, Fahrzeugführung entlang einer Soll-Bahn (4a, 4b, 4c) durchführt, umfassend die Schritte:
- Übermitteln mindestens einer Fahrzeuginformation, betreffend eine Eigenschaft des Kraftfahrzeugs (2a, 2b, 2c), vom Kraftfahrzeug (2a, 2b, 2c) an eine fahrzeugexterne Planungseinrichtung (10);
- Bestimmen einer Soll-Bahn (4a, 4b, 4c) von der aktuellen Position des Kraftfahrzeugs (2a, 2b, 2c) zur Zielposition des Kraftfahrzeugs (2a, 2b, 2c) durch die fahrzeugexterne Planungseinrichtung (10) unter Berücksichtigung der übermittelten mindestens einen Fahrzeuginformation;
- Übermitteln der von der fahrzeugexternen Planungseinrichtung (10) bestimmten Soll-Bahn (4a, 4b, 4c) an das Kraftfahrzeug (2a, 2b, 2c);
- Überführen des Kraftfahrzeugs (2a, 2b, 2c) von der aktuellen Position zur Zielposition im ersten Fahrmodus M₁ entlang der übermittelten Soll-Bahn (4a, 4b, 4c);
**dadurch gekennzeichnet, dass** die mindestens eine Fahrzeuginformation zumindest eine der folgenden Informationen umfasst:
a) eine zweite Information, die eine autonome Fahrfähigkeit des Kraftfahrzeugs (2a, 2b, 2c) charakterisiert, wie beispielsweise einen maximalen Automatisierungsgrad oder eine maximale autonome Fahrstufe im ersten Fahrmodus M₁, eine Rückwärtsfahrfähigkeit im ersten Fahrmodus M₁ und/oder eine zulässige Fahrgeschwindigkeit im ersten Fahrmodus M₁;
b) eine vierte Information betreffend eine Leistungsinformation eines Antriebsstrangs des Kraftfahrzeugs (2a, 2b, 2c), wie beispielsweise ein maximales Antriebsmoment, eine verfügbare Motorleistung und/oder Getriebe-Schaltzeiten;
c) eine fünfte Information, die einen Kraftstoffverbrauch des Kraftfahrzeugs (2a, 2b, 2c) in Abhängigkeit des eingelegten Gangs, dessen Beladungszustand und/oder dessen Geschwindigkeit angibt.

2. Verfahren nach Anspruch 1, **dadurch gekennzeichnet, dass** die mindestens eine Fahrzeuginformation zumindest eine der folgenden Informationen umfasst:
a) eine erste Information, die eine Abmessung des Kraftfahrzeugs (2a, 2b, 2c) angibt oder aus der eine Abmessung des Kraftfahrzeugs (2a, 2b, 2c) ableitbar ist, wie beispielsweise eine Länge, Breite und/oder Höhe des Kraftfahrzeugs (2a, 2b, 2c),
b) eine dritte Information betreffend einen Beladungszustand des Kraftfahrzeugs (2a, 2b, 2c), wie beispielsweise eine Angabe, eine Art, ein Gewicht und/oder eine Verteilung einer Ladung des Kraftfahrzeugs (2a, 2b, 2c) und/oder eine Art eines Aufliegers des Kraftfahrzeugs (2a, 2b, 2c) angibt.

3. Verfahren nach einem der vorherigen Ansprüche, ferner umfassend die Schritte:
- Übermitteln mindestens einer vom Kraftfahrzeug (2a, 2b, 2c) sensorisch erfassten Umgebungsinformation vom Kraftfahrzeug (2a, 2b, 2c) an die fahrzeugexterne Planungseinrichtung (10);
- Bestimmen der Soll-Bahn (4a, 4b, 4c) von der aktuellen Position des Kraftfahrzeugs (2a, 2b, 2c) zur Zielposition des Kraftfahrzeugs (2a, 2b, 2c) durch die fahrzeugexterne Planungseinrichtung (10) unter Berücksichtigung der übermittelten mindestens einen Umgebungsinformation.

4. Verfahren nach Anspruch 3, **dadurch gekennzeichnet, dass** die vom Kraftfahrzeug (2a, 2b, 2c) mindestens eine sensorisch erfasste Umgebungsinformation eine Informationen betreffend ein erfasstes Hindernis (7) ist, wobei das Hindernis (7) ein vom Kraftfahrzeug (2a, 2b, 2c) erfasstes Fremdfahrzeug, ein Fußgänger, und/oder ein auf der Fahrbahn liegendes oder angrenzendes Objekt ist.

5. Verfahren nach einem der vorherigen Ansprüche, ferner umfassend den Schritt:
- Ermitteln, ob eine Konfliktsituation, vorzugsweise eine Gefahrensituation, beim Überführen des Kraftfahrzeugs (2a, 2b, 2c) von der aktuellen Position zur Zielposition im ersten Fahrmodus M₁ entlang der übermittelten Soll-Bahn (4a, 4b, 4c) vorliegt, wobei die Konfliktsituation vorzugsweise eine drohende Kollision mit einem Hindernis (7) ist.

6. Verfahren nach Anspruch 5, ferner umfassend den Schritt:
- Aktualisieren und/oder Neu-Bestimmen der Soll-Bahn (4a, 4b, 4c) bei Vorliegen einer Konfliktsituation.

7. Verfahren nach einem der vorherigen Ansprüche, **dadurch gekennzeichnet, dass** das Kraftfahrzeug (2a, 2b, 2c) in einem zweiten Fahrmodus M₂ ferngesteuert betreibbar ist, in welchem das Kraftfahrzeug (2a, 2b, 2c) von einer fahrzeugexternen Bedienperson ferngesteuert wird, derart, dass die fahrzeugexterne Bedienperson zumindest einen Teil der Fahrzeugführung des Kraftfahrzeugs (2a, 2b, 2c) selbst durchführt.

8. Verfahren nach den Ansprüchen 5 und 7, **dadurch gekennzeichnet, dass** das Kraftfahrzeug (2a, 2b, 2c) von einer fahrzeugexternen Bedienperson im zweiten Fahrmodus M₂ betrieben wird, falls ein Vorliegen einer Konfliktsituation, vorzugsweise ein Vorliegen einer vorbestimmten Konfliktsituation, ermittelt wurde.

9. Verfahren nach einem der vorherigen Ansprüche, **dadurch gekennzeichnet, dass**, falls sich mindestens ein weiteres Kraftfahrzeug (2a, 2b, 2c) in dem vom allgemeinen Straßenverkehr abgetrennten Bereich (1) befindet, der Schritt des Bestimmens der Soll-Bahn (4a, 4b, 4c) des Kraftfahrzeugs (2a, 2b, 2c) durch die fahrzeugexterne Planungseinrichtung (10) unabhängig vom Schritt des Bestimmens der Soll-Bahn (4a, 4b, 4c) des mindestens einem weiteren Kraftfahrzeugs (2a, 2b, 2c), erfolgt.

10. Verfahren nach einem der Ansprüche 3 oder 4, **dadurch gekennzeichnet, dass**, falls sich mindestens ein weiteres Kraftfahrzeug (2a, 2b, 2c) in dem vom allgemeinen Straßenverkehr abgetrennten Bereich (1) befindet, das Bestimmen der Soll-Bahn (4a, 4b, 4c) des Kraftfahrzeugs (2a, 2b, 2c) durch die fahrzeugexterne Planungseinrichtung (10) zusätzlich unter Berücksichtigung der übermittelten Umgebungsinformationen des mindestens eines weiteren Kraftfahrzeugs (2a, 2b, 2c) erfolgt.

11. Verfahren nach einem der vorherigen Ansprüche, **dadurch gekennzeichnet, dass**, falls sich mindestens ein weiteres Kraftfahrzeug (2a, 2b, 2c) in dem vom allgemeinen Straßenverkehr abgetrennten Bereich (1) befindet, jedem der Kraftfahrzeuge (2a, 2b, 2c) ein, vorzugsweise logisches, Rechenmodul (3a, 3b, 3c) der fahrzeugexternen Planungseinrichtung (10) zugeordnet ist, das die Soll-Bahn (4a, 4b, 4c) für das jeweilige Kraftfahrzeug (2a, 2b, 2c) ermittelt.

12. Verfahren nach einem der vorherigen Ansprüche, **dadurch gekennzeichnet, dass** die mindestens eine Fahrzeuginformation eine sechste Information umfasst, die die aktuelle Position des Kraftfahrzeugs (2a, 2b, 2c) angibt und/oder aus der die aktuelle Position des Kraftfahrzeugs (2a, 2b, 2c) ableitbar ist.

13. Verfahren nach einem der vorherigen Ansprüche, **dadurch gekennzeichnet, dass** es sich bei dem vom allgemeinen Straßenverkehr, vorzugsweise durch eine Schranken- und/oder Toranlage, abgetrennten Bereich (1)
a) um ein Privatgelände und/oder
b) um einen Bereich, der aufgrund von Zugangsbeschränkungen nicht von einem zufälligen Personenkreis genutzt werden kann,
handelt.

14. Verfahren nach einem der vorhergehenden Ansprüche, **dadurch gekennzeichnet, dass** es sich bei dem vom allgemeinen Straßenverkehr, vorzugsweise durch eine Schranken- und/oder Toranlage, abgetrennten Bereich (1)
a) um ein Verladeterminal zum Güterumschlag,
b) um eine bewirtschaftete Stellfläche, und/oder
c) um einen Bereich, in dem eine maximale Höchstgeschwindigkeit von 50 km/h, vorzugsweise 30 km/h, gilt,
handelt.

## Claims

1. A method for moving a motor vehicle (2a, 2b, 2c) from a current position to a destination position,
wherein both the current position and the destination position are located in an region (1) separated from the general road traffic, preferably by a barrier system and/or gate system, and
wherein the motor vehicle (2a, 2b, 2c) can be operated in an autonomous or partially autonomous first driving mode M₁ in which the motor vehicle (2a, 2b, 2c) automatically carries out vehicle guidance, comprising both longitudinal guidance and transverse guidance of the motor vehicle (2a, 2b, 2c), along a target path (4a, 4b, 4c) with the aid of a driver assistance system, comprising the steps of:
- transmitting at least one item of vehicle information, relating to a property of the motor vehicle (2a, 2b, 2c), from the motor vehicle (2a, 2b, 2c) to a vehicle-external planning device (10);
- the vehicle-external planning device (10) determining a target path (4a, 4b, 4c) from the current position of the motor vehicle (2a, 2b, 2c) to the destination position of the motor vehicle (2a, 2b, 2c) taking into account the transmitted at least one item of vehicle information;
- transmitting the target path (4a, 4b, 4c) determined by the vehicle-external planning device (10) to the motor vehicle (2a, 2b, 2c);
- moving the motor vehicle (2a, 2b, 2c) from the current position to the destination position in a first driving mode M₁ along the transmitted target path (4a, 4b, 4c);
**characterized in that** the at least one item of vehicle information comprises at least one of the following items of information:
a) a second item of information which characterizes an autonomous driving capability of the motor vehicle (2a, 2b, 2c), such as for example a maximum degree of automation or a maximum autonomous driving stage in the first driving mode M₁, a reversing capability in the first driving mode M₁ and/or a permissible driving speed in the first driving mode M₁;
b) a fourth item of information relating to an item of performance information of a drive train of the motor vehicle (2a, 2b, 2c), such as for example a maximum drive torque, an available engine power level and/or gearbox shifting times;
c) a fifth item of information which indicates a fuel consumption level of the motor vehicle (2a, 2b, 2c) as a function of the engaged gear, the state of loading of the said motor vehicle and/or the speed of the said motor vehicle.

2. The method according to Claim 1, **characterized in that** the at least one item of vehicle information comprises at least one of the following items of information:
a) first item of information which indicates a dimension of the motor vehicle (2a, 2b, 2c) or from which a dimension of the motor vehicle (2a, 2b, 2c) can be derived, such as for example a length, width and/or height of the motor vehicle (2a, 2b, 2c),
b) a third item of information relating to a loading state of the motor vehicle (2a, 2b, 2c), such as for example an indication, a type, a weight and/or a distribution of a load of the motor vehicle (2a, 2b, 2c) and/or a type of trailer of the motor vehicle (2a, 2b, 2c).

3. The method as claimed in either of the preceding claims, further comprising the steps of:
- transmitting at least one item of surroundings information, detected by the motor vehicle (2a, 2b, 2c) using sensors, from the motor vehicle (2a, 2b, 2c) to the vehicle-external planning device (10);
- the vehicle-external planning device (10) determining the target path (4a, 4b, 4c) from the current position of the motor vehicle (2a, 2b, 2c) to the destination position of the motor vehicle (2a, 2b, 2c) taking into account the transmitted at least one item of surroundings information.

4. The method according to Claim 3, **characterized in that** the at least one item of information detected by the motor vehicle (2a, 2b, 2c) using sensors is an item of information relating to a detected obstacle (7), wherein the obstacle (7) is a third-party vehicle detected by the motor vehicle (2a, 2b, 2c), a pedestrian and/or an object lying on or adjacent to the road surface.

5. The method according to one of the preceding claims, further comprising the step of:
- ascertaining whether a conflict situation, preferably a hazardous situation, is present when moving the motor vehicle (2a, 2b, 2c) from the current position to the destination position in the first driving mode M₁ along the transmitted target path (4a, 4b, 4c), wherein the conflict situation is preferably a risk of a collision with an obstacle (7).

6. The method as claimed in claim 5, further comprising the step of:
- updating and/or re-determining the target path (4a, 4b, 4c) when a conflict situation is present.

7. The method according to one of the preceding claims, **characterized in that** the motor vehicle (2a, 2b, 2c) can be operated under remote control in a second driving mode M₂ in which the motor vehicle (2a, 2b, 2c) is remotely controlled by a vehicle-external operator in such a way that the vehicle-external operator carries out at least part of the guidance of the motor vehicle (2a, 2b, 2c) themselves.

8. The method according to Claims 5 and 7, **characterized in that** the motor vehicle (2a, 2b, 2c) is operated in the second driving mode M₂ by a vehicle-external operator if presence of a conflict situation, preferably presence of a predetermined conflict situation, has been ascertained.

9. The method according to one of the preceding claims, **characterized in that**, if at least one further motor vehicle (2a, 2b, 2c) is located in the region (1) separated from the general road traffic, the step of determining the target path (4a, 4b, 4c) of the motor vehicle (2a, 2b, 2c) is performed by the vehicle external planning device (10) independently of the step of determining the target path (4a, 4b, 4c) of the at least one further motor vehicle (2a, 2b, 2c).

10. The method according to either of claims 3 and 4, **characterized in that**, if at least one further motor vehicle (2a, 2b, 2c) is located in the region (1) separated from the general road traffic, the target path (4a, 4b, 4c) of the motor vehicle (2a, 2b, 2c) is determined by the vehicle-external planning device (10) additionally taking into account the transmitted items of surroundings information of the at least one further motor vehicle (2a, 2b, 2c).

11. The method according to one of the preceding claims, **characterized in that**, if at least one further motor vehicle (2a, 2b, 2c) is located in the region (1) separated from the general road traffic, each of the motor vehicles (2a, 2b, 2c) is assigned a, preferably logic, computer module (3a, 3b, 3c) of the vehicle-external planning device (10), the computer module ascertaining the target path (4a, 4b, 4c) for the respective motor vehicle (2a, 2b, 2c).

12. The method according to one of the preceding claims, **characterized in that** the at least one item of vehicle information comprises a sixth item of information which indicates the current position of the motor vehicle (2a, 2b, 2c) and/or from which the current position of the motor vehicle (2a, 2b, 2c) can be derived.

13. The method according to one of the preceding claims, **characterized in that** the region (1) separated from the general road traffic, preferably by a barrier system and/or gate system, is
a) private property and/or
b) a region which cannot be used by a random group of people due to access restrictions.

14. The method according to one of the preceding claims, **characterized in that** the region (1) separated from the general road traffic, preferably by a barrier system and/or gate system, is
a) a loading terminal for handling freight,
b) a managed parking area, and/or
c) a region in which a maximum speed of 50 km/h, preferably 30 km/h, applies.

## Revendications

1. Procédé permettant de transférer un véhicule automobile (2a, 2b, 2c) d'une position actuelle à une position cible,
dans lequel à la fois la position actuelle et la position cible se trouvent dans une zone (1) séparée du trafic routier général, de préférence par un système de barrières et/ou de portes, et
dans lequel le véhicule automobile (2a, 2b, 2c) peut fonctionner dans un premier mode de conduite M₁ autonome ou semi-autonome dans lequel le véhicule automobile (2a, 2b, 2c) effectue de manière autonome, à l'aide d'un système d'aide au conducteur, un maniement de véhicule comprenant à la fois un maniement longitudinal et un maniement latéral du véhicule automobile (2a, 2b, 2c), le long d'une trajectoire de consigne (4a, 4b, 4c), comprenant les étapes consistant à :
- transmettre au moins une information de véhicule concernant une propriété du véhicule automobile (2a, 2b, 2c), du véhicule automobile (2a, 2b, 2c) à un dispositif de gestion externe au véhicule (10) ;
- déterminer une trajectoire de consigne (4a, 4b, 4c) de la position actuelle du véhicule automobile (2a, 2b, 2c) à la position cible du véhicule automobile (2a, 2b, 2c) par le dispositif de gestion externe au véhicule (10) en tenant compte de ladite au moins une information de véhicule transmise ;
- transmettre au véhicule automobile (2a, 2b, 2c) la trajectoire de consigne (4a, 4b, 4c) déterminée par le dispositif de gestion externe au véhicule (10) ;
- transférer le véhicule automobile (2a, 2b, 2c) de la position actuelle à la position cible dans le premier mode de conduite M₁ le long de la trajectoire de consigne (4a, 4b, 4c) transmise ;
**caractérisé en ce que** ladite au moins une information de véhicule comprend au moins l'une des informations suivantes :
a) une deuxième information qui caractérise une capacité de conduite autonome du véhicule automobile (2a, 2b, 2c), comme par exemple un degré d'automatisation maximal ou un niveau maximal de conduite autonome dans le premier mode de conduite M₁, une capacité de marche arrière dans le premier mode de conduite M₁ et/ou une vitesse de conduite admissible dans le premier mode de conduite M₁ ;
b) une quatrième information concernant une information de performance d'une chaîne cinématique du véhicule automobile (2a, 2b, 2c), comme par exemple un couple d'entraînement maximal, une puissance de moteur disponible et/ou des temps de changement de vitesse de boîte de vitesses ;
c) une cinquième information qui indique une consommation de carburant du véhicule automobile (2a, 2b, 2c) en fonction de la vitesse enclenchée, de son état de chargement et/ou de sa vitesse.

2. Procédé selon la revendication 1, **caractérisé en ce que** ladite au moins une information de véhicule comprend au moins l'une des informations suivantes :
a) une première information qui indique une dimension du véhicule automobile (2a, 2b, 2c) ou à partir de laquelle une dimension du véhicule automobile (2a, 2b, 2c) peut être dérivée, comme par exemple une longueur, une largeur et/ou une hauteur du véhicule automobile (2a, 2b, 2c),
b) une troisième information concernant un état de chargement du véhicule automobile (2a, 2b, 2c), comme par exemple une indication indiquant un type, un poids et/ou une répartition d'un chargement du véhicule automobile (2a, 2b, 2c) et/ou un type d'une semi-remorque du véhicule automobile (2a, 2b, 2c).

3. Procédé selon l'une quelconque des revendications précédentes, comprenant en outre les étapes consistant à :
- transmettre au moins une information d'environnement du véhicule automobile (2a, 2b, 2c), détectée par des capteurs, du véhicule automobile (2a, 2b, 2c) au dispositif de gestion externe au véhicule (10) ;
- déterminer la trajectoire de consigne (4a, 4b, 4c) de la position actuelle du véhicule automobile (2a, 2b, 2c) à la position cible du véhicule automobile (2a, 2b, 2c) par le dispositif de gestion externe au véhicule (10) en tenant compte de ladite au moins une information d'environnement transmise.

4. Procédé selon la revendication 3, **caractérisé en ce que** ladite au moins une information d'environnement du véhicule automobile (2a, 2b, 2c), détectée par des capteurs, est une information concernant un obstacle détecté (7), l'obstacle (7) étant un véhicule tiers détecté par le véhicule automobile (2a, 2b, 2c), un piéton et/ou un objet posé sur ou adjacent à la chaussée.

5. Procédé selon l'une quelconque des revendications précédentes, comprenant en outre l'étape consistant à :
- établir si une situation de conflit, de préférence une situation à risque, existe lors du transfert du véhicule automobile (2a, 2b, 2c) de la position actuelle à la position cible dans le premier mode de conduite M₁ le long de la trajectoire de consigne (4a, 4b, 4c) transmise, la situation de conflit étant de préférence une collision imminente avec un obstacle (7).

6. Procédé selon la revendication 5, comprenant en outre l'étape consistant à :
- mettre à jour et/ou redéterminer la trajectoire de consigne (4a, 4b, 4c) en présence d'une situation de conflit.

7. Procédé selon l'une quelconque des revendications précédentes, **caractérisé en ce que** le véhicule automobile (2a, 2b, 2c) peut fonctionner de manière télécommandée dans un deuxième mode de conduite M₂ dans lequel le véhicule automobile (2a, 2b, 2c) est télécommandé par un opérateur externe au véhicule, de sorte que l'opérateur externe au véhicule effectue lui-même au moins une partie du maniement de véhicule du véhicule automobile (2a, 2b, 2c) .

8. Procédé selon les revendications 5 et 7, **caractérisé en ce que** le véhicule automobile (2a, 2b, 2c) est exploité par un opérateur externe au véhicule dans le deuxième mode de conduite M₂ si une présence d'une situation de conflit, de préférence une présence d'une situation de conflit prédéterminée, a été établie.

9. Procédé selon l'une quelconque des revendications précédentes, **caractérisé en ce que**, si au moins un autre véhicule automobile (2a, 2b, 2c) se trouve dans la zone (1) séparée du trafic routier général, l'étape de détermination de la trajectoire de consigne (4a, 4b, 4c) du véhicule automobile (2a, 2b, 2c) est effectuée par le dispositif de gestion externe au véhicule (10) indépendamment de l'étape de détermination de la trajectoire de consigne (4a, 4b, 4c) du au moins un autre véhicule automobile (2a, 2b, 2c).

10. Procédé selon l'une quelconque des revendications 3 et 4, **caractérisé en ce que**, si au moins un autre véhicule automobile (2a, 2b, 2c) se trouve dans la zone (1) séparée du trafic routier général, la détermination de la trajectoire de consigne (4a, 4b, 4c) du véhicule automobile (2a, 2b, 2c) est effectuée par le dispositif de gestion externe au véhicule (10) en plus en tenant compte des informations d'environnement transmises du au moins un autre véhicule automobile (2a, 2b, 2c).

11. Procédé selon l'une quelconque des revendications précédentes, **caractérisé en ce que**, si au moins un autre véhicule automobile (2a, 2b, 2c) se trouve dans la zone (1) séparée du trafic routier général, un module de calcul (3a, 3b, 3c), de préférence logique, du dispositif de gestion externe au véhicule (10) est associé à chacun des véhicules automobiles (2a, 2b, 2c) et établit la trajectoire de consigne (4a, 4b, 4c) pour le véhicule automobile (2a, 2b, 2c) respectif.

12. Procédé selon l'une quelconque des revendications précédentes, **caractérisé en ce que** ladite au moins information de véhicule comprend une sixième information qui indique la position actuelle du véhicule automobile (2a, 2b, 2c) et/ou à partir de laquelle la position actuelle du véhicule automobile (2a, 2b, 2c) peut être dérivée.

13. Procédé selon l'une quelconque des revendications précédentes, **caractérisé en ce que** la zone (1) séparée du trafic routier général, de préférence par un système de barrières et/ou de portes, est
a) un terrain privé, et/ou
b) une zone qui ne peut pas être utilisée par un cercle de personnes aléatoire en raison de limitations d'accès.

14. Procédé selon l'une quelconque des revendications précédentes, **caractérisé en ce que** la zone (1) séparée du trafic routier général, de préférence par un système de barrières et/ou de portes, est
a) un terminal de chargement pour la manutention de marchandises,
b) un espace de stockage exploité, et/ou
c) une zone dans laquelle une vitesse maximale de 50 km/h, de préférence de 30 km/h, est appliquée.
